(19) Europäisches Patentamt
European Patent Office
Office européen des brevets

(11) Veröffentlichungsnummer: **0 393 454 A2**

# (12) EUROPÄISCHE PATENTANMELDUNG

(21) Anmeldenummer: **90106722.3**

(22) Anmeldetag: **07.04.90**

(51) Int. Cl.5: **C08L 69/00, C08L 51/08, //(C08L69/00,69:00,51:08), (C08L51/08,69:00,69:00)**

(30) Priorität: **21.04.89 DE 3913114**

(43) Veröffentlichungstag der Anmeldung: **24.10.90 Patentblatt 90/43**

(84) Benannte Vertragsstaaten: **DE FR GB IT NL**

(71) Anmelder: **BAYER AG**
**D-5090 Leverkusen 1 Bayerwerk(DE)**

(72) Erfinder: **Eckel, Thomas, Dr.**
**Gneisenaustrasse 15a**
**D-4047 Dormagen 1(DE)**
Erfinder: **Wittmann, Dieter, Dr.**
**Wolfskaul 4**
**D-5000 Köln 80(DE)**
Erfinder: **Freitag, Dieter, Dr.**
**Hasenheide 10**
**D-4150 Krefeld 1(DE)**
Erfinder: **Westeppe, Uwe, Dr.**
**Vogelskamp 72**
**D-4020 Mettmann(DE)**
Erfinder: **Ott, Karl-Heinz, Dr.**
**Paul-Klee-Strasse 54**
**D-5090 Leverkusen 1(DE)**

## (54) Wärmeformbeständige Polycarbonat-Formmassen.

(57) Mischungen aus

a) 1-99 Gew.-% speziellen Polycarbonaten auf Basis von Dihydroxydiphenylcycloalkanen

b) 1-99 Gew.-% anderer Polycarbonate, insbesondere solchen auf Basis von Bisphenol A

und

c) 1-95 Gew.-% Silikonkautschuken, insbesondere Silikonpfropfkautschuken, ein Verfahren zu ihrer Herstellung und ihre Verwendung zur Herstellung von Formkörpern.

EP 0 393 454 A2

## Wärmeformbeständige Polycarbonat-Formmassen

Die Erfindung betrifft wärmeformbeständige thermoplastische Formmassen aus Polycarbonaten auf Basis spezieller Dihydroxydiphenylcycloalkane und Silikonkautschuke, ein Verfahren zu ihrer Herstellung und ihre Verwendung zur Herstellung von Formkörpern.

Gegenstand der Erfindung sind Mischungen aus

a) 1-99 Gew.-%, vorzugsweise 10-90 Gew.-%, speziellen Polycarbonaten auf Basis von Dihydroxydiphenylcycloalkanen der Formel (I),

b) 1-99 Gew.-%, vorzugsweise 10-90 Gew.-%, anderen Polycarbonaten, insbesondere solchen auf Basis von Bisphenol A

und

c) 1-95 Gew.-%, vorzugsweise 2-60 Gew.-%, insbesondere 3-40 Gew.-%, Silikonkautschuken, insbesondere Silikonpfropfkautschuken.

<u>Polycarbonate (a)</u>

Dies sind spezielle Polycarbonate auf Basis von Dihydroxydiphenylcycloalkanen der Formel (I),

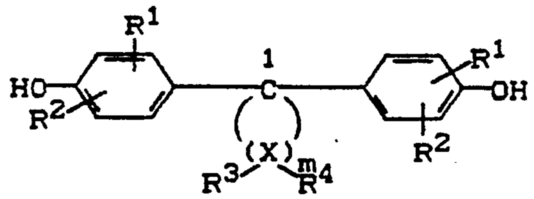

(I),

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl und $C_7$-$C_{12}$-Aralkyl,

m eine ganze Zahl von 4 bis 7, bevorzugt 4 oder 5

$R^3$ und $R^4$ für jedes X individuell wählbar, unabhängig voneinander Wasserstoff, oder $C_1$-$C_6$-Alkyl und Alkyl und

X Kohlenstoff bedeuten,

mit der Maßgabe, daß an mindestens einem Atom X $R^3$ und $R^4$ gleichzeitig Alkyl sind.

Die Polycarbonate (a) sowie ihre Ausgangsprodukte und ihre Herstellung sind in der deutschen Patentanmeldung P 3 832 396.6 beschrieben.

Bevorzugt sind in den Dihydroxydiphenylcycloalkanen der Formel (I) an 1 - 2 Atomen X, insbesondere nur an einem Atom X, $R^3$ und $R^4$ gleichzeitig Alkyl. Bevorzugter Alkylrest ist Methyl; die X-Atome in α-Stellung zu dem diphenyl-substituierten C-Atom (C-1) sind bevorzugt nicht dialkylsubstituiert, dagegen ist die Alkyl-disubstitution in β-Stellung zu C-1 bevorzugt.

Bevorzugt sind Dihydroxydiphenylcycloalkane der Formel (I) mit 5 und 6 Ring-C-Atomen im cycloaliphatischen Rest (m = 4 oder 5 in Formel (I)), beispielsweise die Diphenole der Formeln

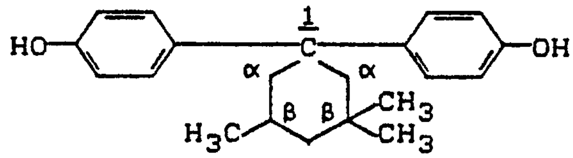

(II)

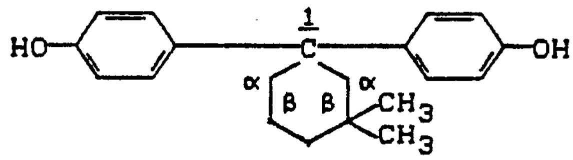

(III) und

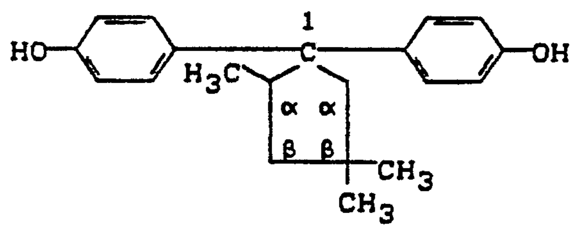

(IV),

wobei das 1,1-Bis-(4-hydroxyphenyl)-3.3.5-trimethylcyclohexan (Formel II) besonders bevorzugt ist.

Die Dihydroxydiphenylcycloalkane der Formel (I) können in an sich bekannter Weise durch Kondensation von Phenolen der Formel (V)

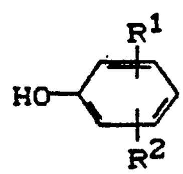

(V)

und Ketonen der Formel (VI)

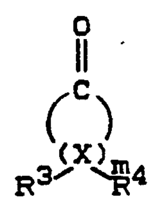

(VI)

hergestellt werden, wobei in den Formeln (V) und (VI) X, $R^1$, $R^2$, $R^3$, $R^4$ und m die für Formel (I) angegebene Bedeutung haben.

Die Phenole der Formel (V) sind entweder literaturbekannt oder nach literaturbekannten Verfahren erhältlich (siehe beispielsweise für Kresole und Xylenole, Ullmanns Encyklopädie der technischen Chemie, 4. neubearbeitete und erweiterte Auflage, Band 15, Seiten 61 - 77, Verlag Chemie Weinheim-New York 1978; für Chlorphenole, Ullmanns Encyklopädie der technischen Chemie, 4. Auflage, Verlag Chemie, 1975, Band 9, Seiten 573-582; und für Alkylphenole, Ullmanns Encyklopädie der technischen Chemie, 4. Auflage, Verlag Chemie 1979, Band 18, Seiten 191-214).

Beispiele für geeignete Phenole der Formel (V) sind: Phenol, o-Kresol, m-Kresol, 2,6-Dimethylphenol, 2-Chlorphenol, 3-Chlorphenol, 2,6-Dichlorphenol, 2-Cyclohexylphenol, Phenylphenole und o- oder p-Benzylphenole.

Die Ketone der Formel (VI) sind literaturbekannt (siehe beispielsweise) Beilsteins Handbuch der Organischen Chemie, 7. Band, 4. Auflage, Springer-Verlag, Berlin, 1925 und die entsprechenden Ergänzungsbände 1 bis 4, und J. Am. Chem. Soc. Vol 79 (1957), Seiten 1488, 1490 und 1491, US-PS 2 692 289, Allen et al., J. Chem Soc., (1954), 2186, 2191 und J. Org. Chem. Vol. 38, No. 26, (1973), Seiten 4431 ff, J. Am. Chem. Soc. 87, (1965), Seite 1353 ff, insbesondere Seite 1355. Ein allgemeines Verfahren zur Herstellung von Ketonen der Formel (VI) ist beispielsweise in "Organikum, 15. Auflage, 1977, VEB-Deutscher Verlag der Wissenschaften, Berlin, Seite 698, beschrieben.

Beispiele für bekannte Ketone der Formel (VI) sind:

3,3-Dimethylcyclopentanon, 2,2-Dimethylcyclohexanon, 3,3-Dimethylcyclohexanon, 4,4-Dimethylcyclohexanon, 3- Ethyl-3-Methylcyclopentanon, 2,3,3-Trimethylcyclopentanon, 2,4,4-Trimethylcyclopentanon, 3,3,4-Trimethylcyclopentanon, 3,3-Dimethylcycloheptanon, 4,4-Dimethylcycloheptanon, 3-Ethyl-3-methylcyclohexanon, 4-Ethyl-4-methylcyclohexanon, 2,3,3-Trimethylcyclohexanon, 2,4,4-Trimethylcyclohexanon, 3,3,4-Trimethylcyclohexanon, 2,5,5-Trimethylcyclohexanon, 3,3,5-Trimethylcyclohexanon, 3,4,4-Trimethylcyclohexanon, 2,3,3,4-Tetramethylcyclopentanon, 2,3,4,4-Tetramethylcyclopentanon, 3,3,4,4-Tetramethylcyclopentanon, 2,2,5-Trimethylcycloheptanon, 2,2,6-Trimethylcycloheptanon, 2,6,6-Trimethylcycloheptanon, 3,3,5-Trimethylcycloheptanon, 3,5,5-Trimethylcycloheptanon, 5-Ethyl-2,5-dimethylcycloheptanon, 2,3,3,5-Tetramethylcycloheptanon, 2,3,5,5-Tetramethylcycloheptanon, 3,3,5,5-Tetramethylcycloheptanon, 4-Ethyl-2,3,4-trimethylcyclopentanon, 2-Isopropyl-4,4-dimethylcyclopentanon, 4-Isopropyl-2,4-dimethylcyclopentanon, 2-Ethyl-3,5,5-trimethylcyclohexanon, 3-Ethyl-3,5,5-trimethylcyclohexanon, 3-Ethyl-4-isopropyl-3-methyl-cyclopentanon, 4-sec. Butyl-3,3-dimethylcyclopentanon, 2-Isopropyl-3,3,4-trimethylcyclopentanon, 3-Ethyl-4-isopropyl-3-methyl-cyclohexanon, 4-Ethyl-3-isopropyl-4-methyl-cyclohexanon, 3-sec.Butyl-4,4-dimethylcyclohexanon, 3-Isopropyl-3,5,5-trimethylcyclohexanon, 4-Isopropyl-3,5,5-trimethylcyclohexanon, 3,3,5-Trimethyl-5-propylcyclohexanon, 3,5,5-Trimethyl-5-propylcyclohexanon, 2-Butyl-3,3,4-trimethylcyclopentanon, 2-Butyl-3,3,4-trimethylcyclohexanon, 4-Butyl-3,3,5-trimethylcyclohexanon, 3-Isohexyl-3-methylcyclohexanon, 5-Ethyl-2,4-diisopropyl-5-methylcyclohexanon, 2,2-Dimethylcyclooctanon, und 3,3,8-Trimethylcyclooctanon.

Beispiele für bevorzugte Ketone sind

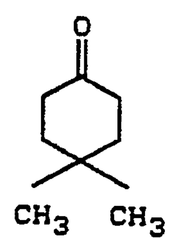

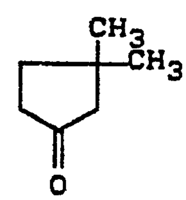

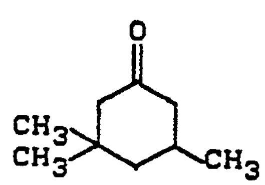

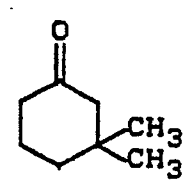

und

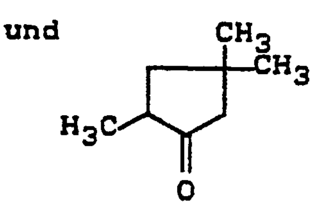

Zur Bisphenolherstellung werden im allgemeinen 2 bis 10 Mol, vorzugsweise 2,5 bis 6 Mol Phenol (V) pro Mol Keton (VI), verwendet. Bevorzugte Reaktionszeiten betragen 1 bis 100 Stunden. Im allgemeinen arbeitet man bei Temperaturen von -30° C bis 300° C, vorzugsweise von -15° C bis 150° C und bei Drücken von 1 bis 20 bar, vorzugsweise von 1 bis 10 bar.

Die Kondensation wird im allgemeinen in Gegenwart saurer Katalysatoren durchgeführt. Beispiele sind Chlorwasserstoff, Bromwasserstoff, Fluorwasserstoff, Bortrifluorid, Aluminiumtrichlorid, Zinkdichlorid, Titantetrachlorid, Zinntetrachlorid, Phosphorhalogenide, Phosphorpentoxid, Phosphorsäure, konzentrierte Salzsäure oder Schwefelsäure sowie Mischungen aus Essigsäure und Acetanhydrid. Die Verwendung saurer Ionenaustauscher ist ebenfalls möglich.

Weiterhin kann die Umsetzung durch Zugabe von Co-Katalysatoren wie $C_1$-$C_{18}$-Alkyl-Mercaptanen, Schwefelwasserstoff, Thiophenolen, Thiosäuren und Dialkylsulfiden beschleunigt werden.

Die Kondensation kann ohne Lösungsmittel oder in Gegenwart eines inerten Lösungsmittels (z.B. aliphatischer und aromatischer Kohlenwasserstoff, Chlorkohlenwasserstoff) durchgeführt werden.

In den Fällen, in denen der Katalysator gleichzeitig als wasserentziehendes Mittel fungiert, ist es nicht erforderlich, zusätzlich wasserentziehende Mittel einzusetzen, letzteres ist jedoch zur Erzielung guter Umsätze in jedem Fall dann vorteilhaft, wenn der eingesetzte Katalysator das Reaktionswasser nicht bindet.

Geeignete wasserentziehende Mittel sind beispielsweise Acetanhydrid, Zeolithe, Polyphosphorsäure und Phosphorpentoxid.

Man kann Phenol (V) und Keton (VI) im Molverhältnis (V) : (VI) = 2:1 bis 10:1, vorzugsweise 2,5 : 1 bis 6 : 1 bei Temperaturen von -30° C bis 300° C, vorzugsweise von -15° C bis 150° C und bei Drücken von 1 bis 20 bar, vorzugsweise von 1 bis 10 bar in Anwesenheit saurer Katalysatoren und gegebenenfalls in Anwesenheit von Co-Katalysatoren und/oder Lösungsmitteln und/oder wasserentziehenden Mitteln umsetzen.

In manchen Fällen verläuft die Reaktion nicht ganz einheitlich, d.h. es können mehrere, unterschiedliche Produkte entstehen, so daß die gewünschte Verbindung zunächst aus einem Gemisch isoliert werden muß. Für Einzelheiten der Kondensation sei verwiesen auf: Schnell, Chemistry und Physics of Polycarbonates, Interscience Publishers, New York 1964. Manchmal kann die Reaktion durch Wahl entsprechender Katalysatoren und Reaktionsbedingungen so gesteuert werden, daß die gewünschte Verbindung ausfällt oder auskristallisiert, was deren Isolierung erleichtert.

Es können sowohl ein Diphenol der Formel (I) unter Bildung von Homopolycarbonaten als auch mehrere Diphenole der Formel (I) unter Bildung von Copolycarbonaten verwendet werden.

Außerdem können die Diphenole der Formel (I) auch im Gemisch mit anderen Diphenolen, beispielsweise mit denen der Formel HO-Z-OH (VII), zur Herstellung von hochmolekularen, thermoplastischen, aromatischen Polycarbonaten verwendet werden.

Geeignete andere Diphenole der Formel HO-Z-OH (VII) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (I) oder Heteroatome als Brückenglieder enthalten kann.

Beispiele für Diphenole der Formel (VII) sind
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α′-Bis-(hydroxyphenyl)-diisopropylbenzole
sowie deren kernalkylierte und kernhalogenierte Verbindungen.

Diese und weitere geeignete andere Diphenole sind z.B. in den US-PS 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 0956, der französischen Patentschrift 1 561 518 und in der Monographie "H. Schnell, Chemistry and Physics of Polycarbonates, Interscience Publishers, New York 1964", beschrieben.

Bevorzugte andere Diphenole sind beispielsweise:
4,4′-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α′-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,

α,α′-Bis-(3,5-dimethyl-4-hydroxyphenyl)-p-diisopropylbenzol,
2,2-Bis-(3,5-dichlor-4-hydroxyphenyl)-propan und
2,2-Bis-(3,5-dibrom-4-hydroxyphenyl)-propan.

Besonders bevorzugte Diphenole der Formel (VII) sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-cyclohexan.

Insbesondere ist 2,2-Bis-(4-hydroxyphenyl)-propan bevorzugt.

Die anderen Diphenole können sowohl einzeln als auch im Gemisch eingesetzt werden.

Das molare Verhältnis von Diphenolen der Formel (I) zu den gegebenenfalls mitzuverwendenden anderen Diphenolen, beispielsweise denen der Formel (VII), soll 100 Mol-% (I) zu 0 Mol-% anderem Diphenol bis 2 Mol-% (I) zu 98 Mol-% anderem Diphenol, vorzugsweise 100 Mol-% (I) zu 0 Mol-% anderem Diphenol bis 5 Mol-% (I) zu 95 Mol-% anderem Diphenol und insbesondere 100 Mol-%(I) zu 0 Mol-% anderem Diphenol bis 10 Mol-% (I) zu 90 Mol-% anderem Diphenol und ganz besonders 100 Mol-% (I) zu 0 Mol-% anderem Diphenol bis 20 Mol-% (I) zu 80 Mol-% anderem Diphenol sein.

Die hochmolekularen Polycarbonate aus den Diphenolen der Formel (I), gegebenenfalls in Kombination mit anderen Diphenolen können nach den bekannten Polycarbonatherstellungsverfahren hergestellt werden. Dabei können die verschiedenen Diphenole sowohl statistisch als auch blockweise miteinander verknüpft sein.

Die Polycarbonate können in an sich bekannter Weise verzweigt sein. Wenn Verzweigung gewünscht wird, kann sie in bekannter Weise durch Einkondensieren geringer Mengen, vorzugsweise Mengen zwischen 0,05 und 2,0 Mol-% (bezogen auf eingesetzte Diphenole), an drei-oder mehr als dreifunktionellen Verbindungen, insbesondere solchen mit drei oder mehr als drei phenolischen Hydroxylgruppen erreicht werden. Einige Verzweiger mit drei oder mehr als drei phenolischen Hydroxylgruppen sind

Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl-isopropyl)-phenol,
2,6-Bis-(2-hydroxy-5′-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester,
Tetra-(4-hydroxyphenyl)-methan,
Tetra-(4-(4-hydroxyphenyl-isopropyl)-phenoxy)-methan und
1,4-Bis-((4′-,4″-dihydroxytriphenyl)-methyl)-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur an sich bekannten Regelung des Molekulargewichts der Polycarbonate dienen monofunktionelle Verbindungen in üblichen Konzentrationen. Geeignete Verbindungen sind z.B. Phenol, tert.-Butylphenole oder andere Alkyl-$C_1$-$C_7$-substituierte Phenole. Zur Regelung des Molekulargewichts sind insbesondere kleine Mengen Phenole der Formel (VIII) geeignet

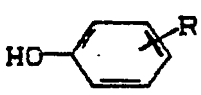

(VIII)

worin R einen verzweigten $C_8$- und/oder $C_9$-Alkylrest darstellt. Bevorzugt ist im Alkylrest R der Anteil an $CH_3$-Protonen zwischen 47 und 89 % und der Anteil der CH- und $CH_2$-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol-%, bezogen auf eingesetzte Diphenole, eingesetzt.

Die Polycarbonate (a) können vorzugsweise durch Phasengrenzflächenpolykondensation (vgl. H.

Schnell, "Chemistry and Physics of Polycarbonates", Polymer Reviews, Vol. IX, Seite 33 ff., Interscience Publ., 1964) in an sich bekannter Weise hergestellt werden. Hierbei werden die Diphenole der Formel (I) in wäßrig alkalischer Phase gelöst. Zur Herstellung von Co-Polycarbonaten mit anderen Diphenolen werden Gemische von Diphenolen der Formel (I) und den anderen Diphenolen, beispielsweise denen der Formel (VII), eingesetzt. Zur Regulierung des Molekulargewichtes können Kettenabbrecher z.B. der Formel (VIII) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0° C und 40° C.

Die gegebenenfalls mitverwendeten Verzweiger (bevorzugt 0,05 bis 2 Mol-%) können entweder mit den Diphenolen in der wäßrig alkalischen Phase vorgelegt werden oder in dem organischen Lösungsmittel gelöst vor der Phosgenierung zugegeben werden.

Neben den Diphenolen der Formel (I) und gegebenenfalls anderen Diphenolen (VII) können auch deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (I) und gegebenenfalls Formel (VII); bei Mitverwendung von Chlorkohlensäureestern kann die Phosgenmenge in bekannter Weise entsprechend reduziert werden.

Geeignete organische Lösungsmittel für die Kettenabbrecher sowie gegebenenfalls für die Verzweiger und die Chlorkohlensäureester sind beispielsweise Methylenchlorid, Chlorbenzol, Aceton, Acetonitril sowie Mischungen dieser Lösungsmittel, insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpolykondensation dienen beispielsweise Methylenchlorid, Chlorbenzol sowie Mischungen aus Methylenchlorid und Chlorbenzol.

Als wäßrige alkalische Phase dient beispielsweise wäßrige NaOH-Lösung.

Die Bildung der Polycarbonate durch Phasengrenzflächenpolykondensation kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen eingesetzt werden. Die Katalysatoren können vor Beginn der Phosgenierung oder während oder auch nach der Phosgenierung zugesetzt werden.

Die Polycarbonate können auch nach dem bekannten Verfahren in homogener Phase, dem sogenannten "Pyridinverfahren" sowie nach dem bekannten Schmelzumesterungsverfahren unter Verwendung von beispielsweise Diphenylcarbonat anstelle von Phosgen hergestellt werden.

Die Polycarbonate haben bevorzugt Molekulargewichte $\overline{M}w$ (Gewichtsmittel, ermittelt durch Gelchromatographie nach vorheriger Eichung) von mindestens 10 000, besonders bevorzugt von 10 000 bis 200 000 und insbesondere von 20 000 bis 80 000. Sie können linear oder verzweigt sein, sie sind Homopolycarbonate oder Copolycarbonate auf Basis der Diphenole der Formel (I).

Polycarbonate (a) im Sinne der Erfindung sind somit hochmolekulare, thermoplastische, aromatische Polycarbonate mit $\overline{M}w$ (Gewichtsmittelmolekulargewichten) von mindestens 10 000, vorzusweise von 10 000 bis 200 000, insbesondere von 20 000 bis 80 000, die bifunktionelle Carbonatstruktureinheiten der Formel (Ia),

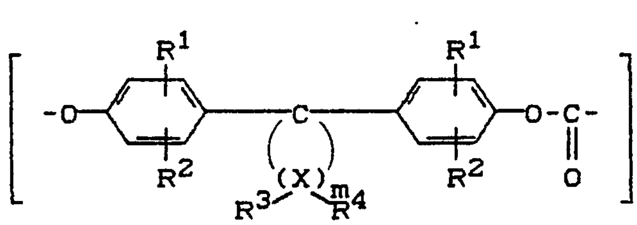 (Ia)

worin

X, $R^1$, $R^2$, $R^3$, $R^4$ und m die für die Formel (I) genannte Bedeutung haben,

in Mengen von 100 Mol-% bis 2 Mol-%, vorzugsweise in Mengen von 100 Mol-% bis 5 Mol-% und insbesondere in Mengen von 100 Mol-% bis 10 Mol-% und ganz besonders 100 Mol-% bis 20 Mol-%, bezogen jeweils auf die Gesamtmenge von 100 Mol-% an difunktionellen Carbonatstruktureinheiten im Polycarbonat enthalten.

Die Polycarbonate enthalten somit jeweils zu 100 Mol-% komplementäre Mengen an anderen difunktionellen Carbonatstruktureinheiten, beispielsweise solchen der Formel (VIIa)

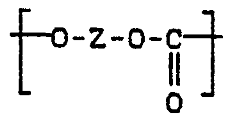

(VIIa),

also in Mengen von 0 Mol-% (einschließlich) bis 98 Mol-% einschließlich, vorzugsweise von 0 Mol-% bis 95 Mol-% und insbesondere von 0 Mol-% bis 90 Mol-% und ganz besonders bevorzugt 0 Mol-% bis 80 Mol-%, bezogen jeweils auf die Gesamtmenge von 100 Mol-% an difunktionellen Carbonatstruktureinheiten im Polycarbonat. [-Z- in Formel (VIIa) entspricht dem -Z- in Formel (VII)].

Durch den Einbau der Diphenole der Formel (I) sind neue Polycarbonate mit hoher Wärmeformbeständigkeit entstanden, die auch sonst ein gutes Eigenschaftsbild haben. Dies gilt insbesondere für die Polycarbonate auf Basis der Diphenole (I), in denen m 4 oder 5 ist, und ganz besonders für die Polycarbonate auf Basis der Diphenole (Ib),

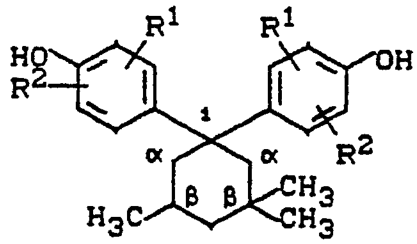

(Ib)

worin
$R^1$ und $R^2$ unabhängig voneinander die für Formel (I) genannte Bedeutung haben und besonders bevorzugt Wasserstoff sind.

Die bevorzugten Polycarbonate sind solche, in denen in den Struktureinheiten der Formel (Ia) m = 4 oder 5 ist und ganz besonders solche aus Einheiten der Formel (Ic),

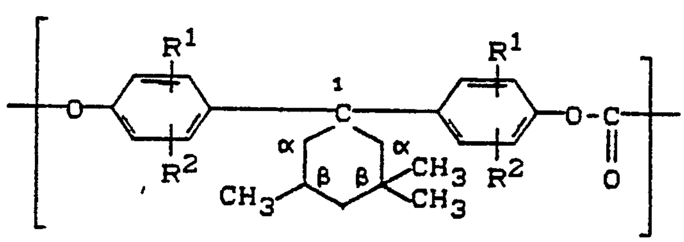

(Ic)

worin
$R^1$ und $R^2$ die für Formel (Ia) genannte Bedeutung haben, besonders bevorzugt aber Wasserstoff sind.

Diese Polycarbonate auf Basis der Diphenole der Formel (Ib), worin insbesondere $R^1$ und $R^2$ Wasserstoff sind, besitzen zur hohen Wärmeformbeständigkeit außerdem eine gute UV-Stabilität und ein gutes Fließverhalten in der Schmelze, was nicht zu erwarten war.

Durch die beliebige Kombination mit anderen Diphenolen, insbesondere mit denen der Formel (VII) lassen sich zudem die Polycarbonateigenschaften in günstiger Weise variieren.

<u>Polycarbonate (b)</u>

Dies sind an sich bekannte aromatische Polycarbonate, die aus anderen Diphenolen als denen der Dihydroxydiphenolcycloalkane der Formel (I) hergestellt worden sind.

Als Polycarbonate (b) können Homo- und Copolycarbonate eingesetzt werden, wie z.B. in US-PS 2 999 835, GB-PS 772 627 und DE-OS 3 334 872 beschrieben. Besonders bevorzugt sind Polycarbonate aus

Bisphenol A.

Silikonkautschuke (c)

Erfindungsgemäß verwendete Silikonkautschuke (c) bestehen überwiegend aus Struktureinheiten

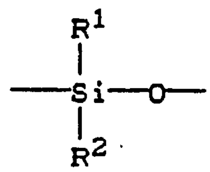

wobei $R^1$ und $R^2$ gleich oder verschieden sein können, und $C_1$-$C_6$-Alkyl oder Cyclohexyl oder $C_6$-$C_{12}$-Aryl bedeuten.

Bevorzugte Silikonkautschuke (c) sind teilchenförmig mit einem mittleren Teilchendurchmesser $d_{50}$ von 0,09 bis 1 µm, vorzugsweise 0,09-0,4 µm und einem Gelgehalt von mehr als 70 Gew.-%, insbesondere 73-98 Gew.-% und sind erhältlich aus

1) Dihalogenorganosilanen

2) 0-10 Mol-%, bezogen auf 1), Trihalogensilanen und

3) 0-3 Mol-%, bezogen auf 1), Tetrahalogensilanen und

4) 0-0,5 Mol-%, bezogen auf 1), Halogentriorganosilanen, wobei die organischen Reste in den Verbindungen 1), 2) 4)

α) $C_1$-$C_6$-Alkyl oder Cyclohexyl, vorzugsweise Methyl oder Ethyl

β) $C_6$-$C_{12}$-Aryl, vorzugsweise Phenyl

γ) $C_1$-$C_6$-Alkenyl, vorzugsweise Vinyl oder Allyl,

δ) Mercapto-$C_1$-$C_6$-Alkyl, vorzugsweise Mercaptopropyl sind, mit der Maßgabe, daß die Summe $(\gamma+\delta)$ 2-10 Mol-%, bezogen auf alle organischen Reste der Verbindungen 1), 2), und 4) ist, und das Molverhältnis $\gamma:\delta$ 3:1 bis 1:3, vorzugsweise 2:1 bis 1:2.

Bevorzugte Silikonkautschuke (c) enthalten als organische Reste mindestens 80 Mol-% Methylgruppen. Endgruppe ist im allgemeinen eine Diorganyl-hydroxyl-siloxy-Einheit, vorzugsweise eine Dimethylhydroxysiloxy-Einheit.

Für die Herstellung der Silikonkautschuke (c) bevorzugte Silane 1) bis 4) enthalten als Halogensubstituenten Chlor.

"Erhältlich" bedeutet, daß der Silikonkautschuk (c) nicht unbedingt aus den Halogenverbindungen 1) bis 4) hergestellt werden muß. Es sollen auch Silikonkautschuke (c) gleicher Struktur, die aus Silanen mit anderen hydrolisierbaren Gruppen, wie z.B. $C_1$-$C_6$-Alkoxygruppen, oder aus cyclischen Siloxanoligomeren hergestellt worden sind, umfaßt werden.

Als eine besonders bevorzugte Komponente (c) werden Silikonpfropfkautschuke genannt. Diese können beispielsweise nach einem dreistufigen Verfahren hergestellt werden.

In der ersten Stufe werden Monomere wie Dimethyldichlorsilan, Vinylmethyldichlorsilan oder Dichlorsilane mit anderen Substituenten zu den durch Destillation einfach zu reinigenden cyclischen Oligomeren (Octamethylcyclotetrasiloxan oder Tetravinyltetramethylcyclotetrasiloxan) umgesetzt. (Vgl. Chemie in unserer Zeit 4 (1987), 121-127.)

In der zweiten Stufe werden aus diesen cyclischen Oligomeren unter Zugabe von Mercaptopropylmethyldimethoxysilan durch ringöffnende kationische Polymerisation die vernetzten Silikonkautschuke erhalten.

In der dritten Stufe werden die erhaltenen Silikonkautschuke, die über pfropfaktive Vinyl- und Mercaptogruppen verfügen, mit Vinylmonomeren (oder Gemischen) radikalisch pfropfpolymerisiert.

Vorzugsweise werden in der zweiten Stufe Mischungen aus cyclischen Siloxanoligomeren wie Octamethylcyclotetrasiloxan und Tetramethyltetravinylcyclotetrasiloxan in Emulsion ringöffnend kationisch polymerisiert. Die Silikonkautschuke fallen teilchenförmig als Emulsion an.

Besonders bevorzugt arbeitet man gemäß GB-PS 1 024 014, mit Alkylbenzolsulfonsäuren, die sowohl katalytisch als auch als Emulgator wirksam sind. Nach der Polymerisation wird die Säure neutralisiert. Anstelle von Alkylbenzolsulfonsäuren können auch n-Alkylsulfonsäuren eingesetzt werden. Es ist auch möglich, neben der Sulfonsäure auch zusätzlich Co-Emulgatoren einzusetzen.

Co-Emulgatoren können nichtionisch oder anionisch sein Als anionische Co-Emulgatoren kommen

insbesondere Salze der n-Alkyl- oder Alkylbenzolsulfonsäuren in Frage. Nichtionische Co-Emulgatoren sind Polyoxyethylenderivate von Fettalkoholen und Fettsäuren. Beispiele sind POE (3)-Laurylalkohol, POE (20)-Oleylalkohol, POE (7)-Nonylalkohol oder POS (10)-Stearat. (Die Schreibweise POE (Zahl)...alkohol bedeutet, daß an ein Molekül ...alkohol soviele Einheiten Ethylenoxid addiert worden sind, wie der Zahl entsprechen. POE steht für Polyethylenoxid. Die Zahl ist ein Mittelwert.)

Die vernetzungs- und pfropfaktiven Gruppen (Vinyl- und Mercaptogruppen, vgl. organische Reste $\gamma$ und $\delta$) können in den Silikonkautschuk durch Verwendung entsprechender Siloxanoligomerer eingefügt werden. Solche sind z.B. Tetramethyltetravinylcyclotetrasiloxan, oder $\gamma$-Mercaptopropylmethyldimethoxysiloxan oder dessen Hydrolysat.

Sie werden dem Hauptoligomer, z.B. Octamethylcyclotetrasiloxan, in der zweiten Stufe in den gewünschten Mengen beigefügt.

Analog kann auch der Einbau längerkettiger Alkylreste, wie z.B. Ethyl, Propyl oder dgl. bzw. der Einbau von Phenylgruppen erreicht werden.

Eine ausreichende Vernetzung des Silikonkautschuks kann schon erreicht werden, wenn die Reste $\gamma$ und $\delta$ bei der Emulsionspolymerisation miteinander reagieren, so daß die Zugabe eines externen Vernetzers entbehrlich sein kann. Jedoch kann ein vernetzendes Silan bei der zweiten Reaktionsstufe zugefügt werden, um den Vernetzungsgrad des Silikonkautschuks zu erhöhen.

Verzweigungen und Vernetzungen können durch Zugabe von z.B. Tetraethoxysilan oder eines Silans der Formel

$y\text{-}SiX_3$,

wobei

X eine hydrolisierbare Gruppe, insbesondere ein Alkoxy- oder Halogenrest, und

y ein organischer Rest ist,

erzielt werden.

Bevorzugte Silane $y\text{-}SiX_3$ sind Methyltrimethoxysilan und Phenyltrimethoxysilan.

Der mittlere Teilchendurchmesser $d_{50}$ der Silikonkautschuke ist der Durchmesser, oberhalb und unterhalb dessen jeweils 50 Gew.-% der Teilchen liegen. Er kann mit Ultrazentrifugen-Messungen (W. Scholtan, H. Lange, Kolloid. Z. und Z. Polymere 250 (1972), 782-796) bestimmt werden.

Der Gelgehalt wird bei 25° C in Aceton bestimmt (vgl. DE-AS 2 521 288, SP. 6, Z. 17-37). Er beträgt bei den erfindungsgemäßen Silikonkautschuken mindestens 70%, vorzugsweise 73 - 98 Gew.-%.

Gepfropfte Silikonkautschuke (c) können durch radikalische Pfropfpolymerisation, beispielsweise analog DE-PS 2 421 288, hergestellt werden.

Zur Herstellung des gepfropften Silikonkautschuks in der dritten Stufe können die Pfropfmonomeren in Anwesenheit des Silikonkautschuks radikalisch pfropfpolymerisiert werden, insbesondere bei 40 bis 90° C. Die Pfropfpolymerisation kann in Suspension, Dispersion oder Emulsion durchgeführt werden. Bevorzugt ist die kontinuierliche oder diskontinuierliche Emulsionspolymerisation. Diese Pfropfpolymerisation wird mit Radikalinitiatoren durchgeführt (z.B. Peroxiden, Azoverbindungen, Hydroperoxiden, Persulfaten, Perphosphaten) und gegebenenfalls unter Einsatz von anionischen Emulgatoren, z.B. Carboxoniumsalzen, Sulfonsäuresalzen oder organischen Sulfaten. Dabei bilden sich Pfropfpolymerisate mit hohen Pfropfausbeuten, d.h. ein großer Anteil des Polymerisates der Pfropfmonomeren wird an den Silikonkautschuk chemisch gebunden. Der Silikonkautschuk besitzt pfropfaktive Reste, so daß besondere Maßnahmen für starke Pfropfung überflüssig sind.

Die gepfropften Silikonkautschuke (c) können durch Pfropfpolymerisation von 5 bis 90 Gew.-Teilen, vorzugsweise 20 bis 80 Gew.-Teilen eines Vinylmonomeren oder eines Vinylmonomerengemisches auf 10 bis 95, vorzugsweise 20 bis 80 Gew.-Teile Silikonkautschuk hergestellt werden.

Ein besonders bevorzugtes Vinylmonomeres ist Methylmethacrylat. Geeignete Vinylmonomermischungen bestehen aus 50 - 95 Gew.-Teilen Styrol, $\alpha$-Methylstyrol (oder anderen Alkyl- oder Halogen-kernsubstituierten Styrolen) oder Methylmethacrylat einerseits und aus 5 - 50 Gew.-Teilen Acrylnitril, Methacrylnitril, Acrylsäure-$C_1$-$C_{18}$-alkylester, Methacrylsäure-$C_1$-$C_{16}$-alkylester, Maleinsäureanhydrid oder substituierten Maleinimiden andererseits. Als weitere Vinylmonomere können zusätzlich in kleineren Mengen Acrylsäureester von primären oder sekundären aliphatischen $C_2$-$C_{10}$-Alkoholen, vorzugsweise n-Butylacrylat oder Acryl- oder Methylacrylsäureester des tert. Butanols, vorzugsweise t-Butylacrylat, anwesend sein. Ein besonders bevorzugtes Monomerengemisch ist 30 bis 40 Gew.-Teile $\alpha$-Methylstyrol, 52 bis 62 Gew.-Teile Methylmethacrylat und 4 bis 14 Gew.-Teile Acrylnitril.

Die so gepfropften Silikonkautschuke (c) können in bekannter Weise aufgearbeitet werden, z.B. durch Koagulation der Latices mit Elektrolyten (Salzen, Säuren oder Gemischen davon) und anschließende Reinigung und Trocknung.

Bei der Herstellung der gepfropften Silikonkautschuke (c) bilden sich im allgemeinen neben dem

eigentlichen Pfropfcopolymerisat in bestimmtem Ausmaß auch freie Polymerisate bzw. Copolymerisate der die Pfropfhülle bildenden Pfropfmonomeren. Hier ist gepfropfter Silikonkautschuk das durch Polymerisation der Pfropfmonomeren in Gegenwart des Silikonkautschuks erhaltene Produkt, genau genommen also im allgemeinen ein Gemisch aus Pfropfcopolymerisat und freiem (Co-) Polymerisat der Pfropfmonomeren bezeichnet.

Die erfindungsgemäßen Formmassen weisen optimale Eigenschaften auf, wenn die Menge an freiem (Co-)Polymerisat 50, vorzugsweise 30, insbesondere 20 Ge.-%, bezogen auf Komponente (c), nicht übersteigt.

Die erfindungsgemäßen Formmassen können weitere für aromatische Polycarbonate sowie für Silikonpfropfkautschuke bekannte Zusätze, wie Stabilisatoren, Pigmente, Entformungsmittel, Flammschutzmittel und/oder Antistatika, in den üblichen Mengen enthalten.

Die erfindungsgemäßen Formmassen können hergestellt werden, indem man die Bestandteile in bekannter Weise vermischt und bei erhöhten Temperaturen, vorzugsweise. bei 200 bis 350° C, in üblichen Vorrichtungen, wie Innenknetern, Extrudern oder Doppelwellenschnecken, schmelzcompoundiert oder schmelzextrudiert. Die einzelnen Komponenten können nacheinander oder gleichzeitig gemischt werden.

Gegenstand der vorliegenden Erfindung ist somit auch ein Verfahren zur Herstellung von thermoplastischen Formmassen enthaltend die Komponente (a), (b) und (c) sowie gegebenenfalls Stabilisatoren, Pigmente, Entformungsmittel, Flammschutzmittel und/oder Antistatika, das dadurch gekennzeichnet ist, daß man die Komponenten (a), (b) und (c) sowie gegebenenfalls Stabilisatoren, Pigmente, Entformungsmittel, Flammschutzmittel und/oder Antistatika in bekannter Weise vermischt und bei erhöhten Temperaturen, vorzugsweise bei Tempeaturen von 200° C bis 350° C, in üblichen Vorrichtungen wie Innenknetern, Extrudern oder Doppelschnecken, schmelzcompoundiert oder schmelzextrudiert.

Die erfindungsgemäßen Formmassen können zur Herstellung von Formkörpern jeder Art, z.B. durch Spritzgießen verwendet werden. Beispiele für Formkörper sind: Gehäuseteile (z.B. für Haushaltsgeräte wie Saftpressen, Kaffeemaschinen, Mixer, Mikrowellengeschirr), Abdeckplatten für das Baugewerbe, Automobilteile. Sie werden außerdem für elektrische Geräte, z.B. für Steckerleisten, Spulenkörper und Leiterplatten, eingesetzt.

Formkörper können auch durch Tiefziehen aus vorher hergestellten Platten oder Folien hergestellt werden.

Weiterer Gegenstand der Erfindung ist also die Verwendung der beschriebenen Formmassen zur Herstellung von Formkörpern.

Polycarbonate (a)

1) Herstellung eines Bisphenols der Formel (I)

In einem 1-Liter Rundkolben mit Rührer, Tropftrichter, Thermometer, Rückflußkühler und Gaseinleitungsrohr werden 7,5 Mol (705 g) Phenol und 0,15 Mol (30,3 g) Dodecylthiol vorgelegt und bei 28 - 30° C mit trockenem HCl-Gas gesättigt. Zu dieser Lösung werden innerhalb von 3 Stunden eine Lösung von 1,5 Mol (210 g) Dihydroisophoron (3,3,5-Trimethyl-cyclohexan-1-on) und 1,5 Mol (151 g) Phenol zugetropft, wobei weiter HCl-Gas durch die Reaktionslösung geleitet wird Dann leitet man noch weitere 5 Stunden HCl-Gas ein. Man läßt 8 Stunden bei Zimmertemperatur nachreagieren. Anschließend wird das überschüssige Phenol durch Wasserdampfdestillation entfernt. Der Rückstand wird zweimal mit Petrolether (60-90) und einmal mit Methylenchlorid heiß extrahiert und abfiltriert.
Ausbeute: 370 g
Schmelzpunkt: 205-207° C.

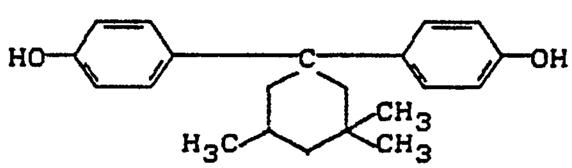

2) Herstellung eines Copolycarbonates (a)

1436,4 g (6,3 Mol) Bisphenol-A (2,2-Bis(4-hydroxyphenyl)propan, 2387,0 g (7,7 Mol) Bisphenol der Formel (I), 7476,0 (84 Mol) 45%ige NaOH und 33,7 l Wasser werden in einer Inertgas-Atmosphäre unter Rühren gelöst. Dann fügt man eine Lösung von 36,9 g (0,392 Mol) Phenol in 11 l Methylenchlorid und 13 l Chlorbenzol zu. In die gut gerührte Lösung wurden bei pH 13 - 14 und 21-25° C 2772 g (28 mol) Phosgen eingeleitet. Danach wurden 14 ml Ethylpiperidin zugegeben und noch 45 Min gerührt. Die bisphenolatfreie wäßrige Phase wird abgetrennt, die organische Phase nach Ansäuern mit Phosphorsäure mit Wasser elektrolytfrei gewaschen und vom Lösungsmittel befreit Relative Viskosität $\eta_{rel}$ = 1,30 (in Methylenchlorid bei 25° C und einer Konzentration von in 0,5 g/dl). Glastemperatur $T_g$ = 206° C (DSC).

Polycarbonate (b)

Polycarbonate aus Bisphenol A mit einer relativen Viskosität $\eta_{rel}$ = 1,22 in Methylenchlorid bei 25° C und einer Konzentration von 0.5 g/dl).

Silikonpfropfkautschuk (c)

1. Herstellung der Silikonkautschuk-Emulsion

38,4 Gew.-Teile Octamethylcyclotetrasiloxan, 1,2 Gew.-Teile Tetramethyltetravinylcyclotetrasiloxan und ein Gew.-Teil Mercaptopropylmethyldimethoxysilan werden miteinander verrührt. 0,5 Gew.-Teile Dodecylbenzolsulfonsäure werden zugefügt, anschließend 58,4 Gew.-Teile Wasser innerhalb einer Stunde zugegeben. Dabei wird intensiv gerührt. Die Voremulsion wird mit Hilfe einer Hochdruckemulgiermaschine zweimal bei 200 bar homogenisiert. Man gibt weitere 0,5 Gew.-Teile Dodecylbenzolsulfonsäure hinzu. Die Emulsion wird 2 Stunden bei 85° C und anschließend 36 Stunden bei 20° C gerührt. Neutralisiert wird mit Hilfe von 5n-NaOH. Es resultiert eine stabile Emulsion mit einem Feststoffgehalt von ca 36 Gew.-%. Das Polymer besitzt einen Gelgehalt von 82 Gew.-%, gemessen in Toluol; der mittlere Teilchendurchmesser $d_{50}$ beträgt 300 nm.

2. Herstellung des gepfropften Silikonkautschuks

In einem Reaktor werden vorgelegt:
2107 Gew.-Teile Latex gemäß 1). und
1073 Gew.-Teile Wasser.

Nach Initiierung mit einer Lösung von 7,5 Gew.-Teilen Kaliumperoxydisulfat in 195 Gew.-Teilen Wasser bei 65° C werden jeweils folgende Lösungen zur Herstellung des Pfropfkautschukes innerhalb von 4 Stunden gleichmäßig eingespeist:

Lösung 1: 540 Gew.-Teile Styrol und
210 Gew.-Teile Acrylnitril;

Lösung 2: 375 Gew.-Teile Wasser und
15 Gew.-Teile Natriumsalz von $C_{14}$-$C_{18}$-Alkylsulfonsäuren.

Anschließend wird jeweils innerhalb von 6 Stunden bei 65° C auspolymerisiert. Es resultiert ein Latex mit einem Feststoffgehalt von ca. 33 Gew.-%.

Nach Koagulation mit einer wäßrigen Magnesiumchlorid/Essigsäurelösung, Filtration und Trocknung im Vakuum werden die Pfropfpolymerisate in Form weißer Pulver erhalten.

Herstellung der Mischungen

Die Bestandteile wurden in einem 1,3 l Innenkneter bei Temperaturen von 260-320° C homogenisiert (siehe Tabelle 1).
Anschließend wurden auf einer Spritzgußmaschine Stäbe der Abmessung 80 x 10 x 4 mm gegossen und die Kerbschlagzähigkeit $a_k$ nach Izod (ISO 180) sowie die Wärmeformbeständigkeit Vicat B (DIN 53 460)

bestimmt.

Tabelle 1

| Beispiel | 1* | 2 | 3 | 4 |
|---|---|---|---|---|
| Polycarbonat (a) Gew.-Teile | -- | 10 | 20 | 40 |
| Polycarbonat (b) Gew.-Teile | 80 | 70 | 60 | 40 |
| Silikonkautschuk (c) Gew.-Teile | 20 | 20 | 20 | 20 |
| $a_k$ [kJ/m²] | | | | |
| + 20° C | 54 | 52 | 49 | 42 |
| - 20° C | 44 | 43 | 41 | 31 |
| Vicat B/120 [° C] | 140 | 145 | 150 | 161 |
| $a_k$: Kerbschlagzähigkeit | | | | |
| *: Vergleichsversuch | | | | |

Die erfindungsgemäßen Beispiele 2-4 verdeutlichen, daß bei weitgehendem Erhält der Zähigkeit die Wärmeformbeständigkeit signifikant verbessert wird.

**Ansprüche**

1. Mischungen aus

a) 1-99 Gew.-% Polycarbonaten auf Basis von Dihydroxydiphenylcycloalkanen dar Formel (I)

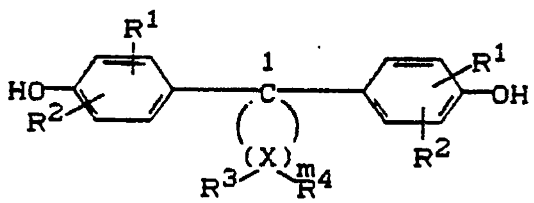

(I),

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl und $C_7$-$C_{12}$-Aralkyl,

m eine ganze Zahl von 4 bis 7, bevorzugt 4 oder 5

$R^3$ und $R^4$ für jedes X individuell wählbar, unabhängig voneinander Wasserstoff, oder $C_1$-$C_6$-Alkyl und Alkyl und

X Kohlenstoff bedeuten,

mit der Maßgabe, daß an mindestens einem Atom X $R^3$ und $R^4$ gleichzeitig Alkyl sind,

b) 1-99 Gew.-% anderen Polycarbonaten und

c) 1-95 Gew.-% eines Silikonkautschuks.

2. Mischungen nach Anspruch 1, in denen b) ein Polycarbonat oder Copolycarbonat auf Basis von Bisphenol A ist.

3. Mischungen nach Anspruch 1, in denen c) ein gepfropfter Silikonkautschuk ist.

4. Mischungen nach Anspruch 1, in denen der Silikonkautschuk ein Pfropfpolymerisat aus 5-90 Gew.-Teilen einer Mischung aus 50 -98 Gew.-Teilen Styrol, α-Methylstyrol, Halogen- oder Methylkernsubstituierten Styrolen, Methylmethacrylat oder Mischungen dieser Verbindungen

und

2-50 Gew.-Teilen Acrylnitril, Methacrylnitril, Acrylsäure-$C_1$-$C_{18}$-Alkylestern, Methacrylsäure-$C_1$-$C_{16}$-Alkylestern, Maleinsäureanhydrid, $C_1$-$C_4$-Alkyl- oder Phenyl-H-substituierte Maleinimide oder Mischungen dieser Verbindungen auf 10-95 Gew.-Teile Silikonkautschuk mit einem mittleren Teilchendurchmesser $d_{50}$ von 0,09 bis 1 µm und einem Gelgehalt von mehr als 70, erhältlich aus

1) Dihalogendiorganosilanen
2) 0 - 10 Mol-% Trihalogenorganosilan,
3) 0 - 3 Mol-% Tetrahalogensilan und
4) 0 - 0,5 Mol-% Halogentriorganosilanen ist, wobei die organischen Reste der Verbindungen 1), 2) und 4)
α) $C_1$-$C_6$-Alkyl oder Cyclohexyl,
β) $C_6$-$C_{12}$-Aryl,
γ) $C_1$-$C_6$-Alkenyl,
δ) Mercapto-$C_1$-$C_6$-Alkyl,
bedeuten mit der Maßgabe, daß die Summe ($\gamma+\delta$) 2 bis 10 Mol-%, bezogen auf alle organischen Reste der Verbindungen 1), 2) und 4), und das Molverhältnis $\gamma=\delta$ = (3:1) bis (1:3) ist.

5. Mischungen gemäß Anspruch 1, in denen der Teilchendurchmesser $d_{50}$ des Silikonkautschuks 0,09 bis 0,4 µm beträgt.

6. Mischungen gemäß Anspruch 1, in denen der Gelgehalt des Silikonkautschuks 73 bis 98 Gew.-% beträgt.

7. Mischungen gemäß Anspruch 1, in denen von den Organylresten der Komponenten 1), 2) und 4) mindestens 80 Mol-% Methyl (aus der Gruppe α) ist, die Reste γ Vinyl- und/oder Allylgruppen und die Reste δ Mercaptopropylreste sind.

8. Mischungen gemäß Anspruch 1, die zusätzlich Stabilisatoren, Pigmente, Entformungsmittel, Flammschutzmittel und Antistatika, enthalten.

9. Verfahren zur Herstellung der Mischungen des Anspruchs 1, dadurch gekennzeichnet, daß man die Komponenten (a), (b) und (c) sowie gegebenenfalls Stabilisatoren, Pigmente, Entformungsmittel, Flammschutzmittel und/oder Antistatika in bekannter Weise vermischt und bei erhöhter Temperatur in üblichen Vorrichtungen schmelzcompoundiert oder schmelzextrudiert.

10. Verwendung der Mischungen des Anspruchs 1 zur Herstellung von Formkörpern.